# EUROPEAN PATENT APPLICATION

(11) **EP 4 813 922 A1**
(43) Date of publication of application: **30.09.2026**
(21) Application number: 24893866.4
(22) Date of filing: 01.10.2024
(51) Int. Cl.: C01G 39/06

(54) **METHOD FOR PRODUCING FINE MOLYBDENUM DISULFIDE PARTICLES**

(30) Priority: 24.11.2023 JP 2023199089
(71) Applicant: DIC Corporation, Tokyo 174-8520 (JP)
(72) Inventor: MURATA, Hideyuki, Sakura-shi, Chiba 285-8668 (JP); HIRABAYASHI, Koki, Sakura-shi, Chiba 285-8668 (JP); YAGI, Naoto, Sakura-shi, Chiba 285-8668 (JP); YUAN, Jianjun, Sakura-shi, Chiba 285-8668 (JP); IMAMURA, Shoji, Sakura-shi, Chiba 285-8668 (JP)
(74) Representative: TBK
(86) International application number: PCT/JP2024/035059
(87) International publication number: WO 2025/109872

(57) **Abstract**

To provide a method for producing molybdenum disulfide fine particles, the method capable of efficiently producing the molybdenum disulfide fine particles at a high conversion rate even with low energy consumption. The method for producing molybdenum disulfide fine particles of the present invention includes irradiating molybdenum trioxide with an electromagnetic wave in the presence of sulfur to heat the molybdenum trioxide and cause the heated molybdenum trioxide to react with the sulfur. A frequency of the electromagnetic wave is in a range of from 300 to 30000 MHz.

## Description

### TECHNICAL FIELD

The present invention relates to a method for producing molybdenum disulfide fine particles.

The present application claims priority from the JP 2023-199089, filed in Japan on November 24, 2023, the contents of which are incorporated herein by reference.

### BACKGROUND ART

Molybdenum sulfide is known as a lubricant for reducing friction and wear mainly in the automobile industry and is used particularly as a liquid-based lubricant such as engine oil in various countries. Molybdenum sulfide represented by molybdenum disulfide (MoS₂) is known to be applied as, for example, a lubricant contained in a solid sliding member or grease (see Patent Documents 1 to 3).

A method is known in which a molybdenum trioxide powder composed of fine particles of molybdenum trioxide is heated at a temperature of from 200 to 1000°C in the presence of a sulfur source to produce a molybdenum disulfide powder (see Patent Document 4).

### CITATION LIST

### PATENT DOCUMENT

Patent Document 1: JP 2017-115920 A
Patent Document 2: JP 2013-144758 A
Patent Document 3: JP 6614471 B
Patent Document 4: JP 7060170 B

### SUMMARY OF INVENTION

### TECHNICAL PROBLEM

However, a known method for producing a molybdenum disulfide powder involves performing electric-type heating in the presence of a molybdenum trioxide powder and a sulfur source. Therefore, not only the molybdenum trioxide powder and the sulfur source but also the surrounding atmosphere is heated, resulting in high energy consumption, and ON/OFF control becomes difficult. That is, in the known heating by electric heating, the atmosphere around raw materials (molybdenum trioxide and sulfur) to be heated is also heated. Therefore, even when the supply of heating energy is cut off, the atmosphere itself is hard to cool rapidly, making it difficult to efficiently produce molybdenum disulfide fine particles having a fine particle size. Therefore, a production method capable of efficiently producing molybdenum disulfide fine particles with low energy consumption at a high conversion rate has been required.

As a result of intensive studies, the present inventors have found that molybdenum trioxide absorbs electromagnetic waves well and the temperature rises quickly, whereas sulfur itself is hardly heated by electromagnetic wave irradiation because sulfur has poor absorbability of electromagnetic waves. Thus, when molybdenum trioxide is mixed with sulfur and irradiated with electromagnetic waves, molybdenum trioxide is preferentially heated, and the reaction activity thereof is enhanced. A part of the molybdenum trioxide heated to a high temperature and thereby exhibiting increased reaction activity reacts with the surrounding sulfur and immediately converts into molybdenum disulfide. Heating by electromagnetic wave irradiation activates the reaction of molybdenum trioxide while suppressing vaporization and removal of sulfur, thereby enabling efficient production of molybdenum disulfide fine particles with low energy consumption at a high conversion rate. That is, in the present embodiment, heating by electromagnetic wave irradiation allows easy ON/OFF control and irradiation-intensity control and enables selective heating of the molybdenum trioxide without heating the atmosphere. Accordingly, it is an object of the present invention to provide a method for producing molybdenum disulfide, the method capable of efficiently producing the molybdenum disulfide fine particles at a high conversion rate even with low energy consumption.

### SOLUTION TO PROBLEM

The present embodiment is based on the findings of the present inventors, and means for solving the problems are as follows.
[1] A method for producing molybdenum disulfide fine particles, the method including:
   irradiating molybdenum trioxide with an electromagnetic wave in the presence of sulfur to heat the molybdenum trioxide and cause the heated molybdenum trioxide to react with the sulfur,
   wherein a frequency of the electromagnetic wave is in a range of from 300 to 30000 MHz.
[2] The method for producing molybdenum disulfide fine particles according to [1], wherein the frequency of the electromagnetic wave is in a range of from 900 to 2450 MHz.
[3] The method for producing molybdenum disulfide fine particles according to [1] or [2], wherein an average particle size of the molybdenum disulfide fine particles is from 10 nm to 10 µm.
[4] The method for producing molybdenum disulfide fine particles according to any of [1] to [3], wherein a BET specific surface area of the molybdenum disulfide fine particles is from 0.01 m²/g to 500 m²/g.
[5] The method for producing molybdenum disulfide fine particles according to any of [1] to [4], wherein the molybdenum disulfide fine particles have a 2H crystal structure.
[6] The method for producing molybdenum disulfide fine particles according to any of [1] to [5], wherein the molybdenum disulfide fine particles have a 3R crystal structure.
[7] The method for producing molybdenum disulfide fine particles according to any of [1] to [6], wherein an average particle size of the molybdenum trioxide is 10 µm or less.
[8] The method for producing molybdenum disulfide fine particles according to any of [1] to [7], wherein a BET specific surface area of the molybdenum trioxide is 0.1 m²/g or more.

### ADVANTAGEOUS EFFECTS OF INVENTION

According to the present embodiment, it is possible to provide a method for producing molybdenum disulfide fine particles, the method capable of efficiently producing the molybdenum disulfide fine particles with low energy consumption at a high conversion rate.

### BRIEF DESCRIPTION OF DRAWINGS

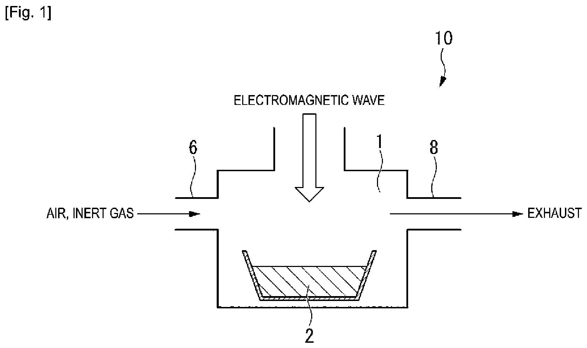

[Fig. 1] Fig. 1 is a schematic view of an example of an apparatus used for producing molybdenum disulfide fine particles according to an embodiment of the present invention.

### DESCRIPTION OF EMBODIMENTS

### (Method for Producing Molybdenum Disulfide Fine Particles)

A method for producing molybdenum disulfide fine particles according to an embodiment of the present invention includes irradiating molybdenum trioxide with an electromagnetic wave in the presence of sulfur to heat the molybdenum trioxide and cause the heated molybdenum trioxide to react with the sulfur. The frequency of the electromagnetic wave is in the range of from 300 to 30000 MHz. The frequency of the electromagnetic wave is preferably in the range of from 900 to 2450 MHz.

The method for producing molybdenum disulfide fine particles of the present embodiment may involve mixing molybdenum trioxide with sulfur and irradiating the mixture with electromagnetic waves, thereby causing the molybdenum trioxide thus heated to react with the sulfur.

In the method for producing molybdenum disulfide fine particles of the present embodiment, the reaction between the molybdenum trioxide and the sulfur is preferably carried out, for example, according to a reaction formula shown in the following formula (1). This is because the sulfide is released from the reaction system, only molybdenum disulfide remains in the system as a product, and the sulfide can be easily captured with an alkali or the like without being released into the air.

2MoO₃ + 7S → 2MoS₂ + 3SO₂ (1)

The method for producing molybdenum disulfide fine particles of the present embodiment can be suitably carried out using, for example, a production apparatus 10 for molybdenum disulfide fine particles shown in Fig. 1.

Fig. 1 is a schematic view of an example of an apparatus used for producing molybdenum disulfide fine particles according to the present embodiment. An apparatus capable of irradiating the electromagnetic waves (sometimes referred to as an "electromagnetic-wave irradiation apparatus," not shown) is disposed above the chamber 1. The apparatus 10 for producing molybdenum disulfide fine particles includes a chamber 1 in which the molybdenum trioxide is heated by irradiating the mixture of the molybdenum trioxide and the sulfur disposed in a container 2 with electromagnetic waves (hereinafter, sometimes referred to as "electromagnetic wave heating") generated in the electromagnetic-wave irradiation apparatus, thereby causing the heated molybdenum trioxide to react with sulfur. The chamber 1 includes an outside-air inlet 6 disposed at the left end and an exhaust port 8 disposed at the right end. An air discharge device (not shown) serving as an air blowing unit is connected to the air inlet 6. The apparatus 10 for producing molybdenum disulfide fine particles may include an external cooling device (not shown), which makes it possible to arbitrarily control the reaction conditions in the chamber 1.

### [Molybdenum Disulfide Fine Particles]

The product obtained by the method for producing molybdenum disulfide fine particles of the present embodiment is a fine particle composed of molybdenum disulfide (MoS₂). The fine particle has a certain preferred average particle size range, which will be described later. The molybdenum disulfide fine particles according to the production method of the present embodiment may contain molybdenum sulfide other than molybdenum disulfide (MoS₂). As used herein, molybdenum sulfide is a generic term for a compound composed of a molybdenum atom and a sulfur atom. Examples of such molybdenum sulfide include those represented by MoSx (x = 1 to 3). Depending on the balance of the molar ratio of molybdenum trioxide and sulfur charged, the fine particles of molybdenum disulfide (MoS₂) obtained may also contain a certain amount of other molybdenum sulfides.

Atoms other than molybdenum atoms and sulfur atoms may be contained in molybdenum disulfide within a range not inhibiting the effects of the present embodiment. Specific examples thereof include silicon, aluminum, sodium, iron, titanium, potassium, calcium, yttrium, and the like. These other atoms may be contained alone or in combination of two or more types thereof.

The content of the other atoms in the molybdenum disulfide is preferably 10 mol% or less, more preferably 5 mol% or less, and most preferably 2 mol% or less.

The molybdenum disulfide fine particles obtained by the production method of the present embodiment can be appropriately selected and used based on the surface or internal structure depending on the application of the molybdenum disulfide fine particles. For example, when the compound itself is used as a catalyst, it is effective to increase the contact area with the molecules of the reaction raw materials as much as possible in order to more effectively progress the intended chemical reaction. The molybdenum disulfide having a structure, for example, a porous structure in which the surface has pore inlets directed toward the inside of the surface and the inside has independent pores and/or pores communicating with other surfaces, can exhibit catalytic activity as compared with that having a medium-dense structure. The size and degree of the pores inside the hexahedron of molybdenum sulfide can be appropriately measured by a known and commonly used method corresponding to each of micropores, mesopores, and macropores. Specific examples of the measurement method include Japanese Industrial Standard (JIS) Z8831 and Japanese Industrial Standard (JIS) Z8830. Japanese Industrial Standard (JIS) Z8831 is a measurement method for the pore size distribution and pore characteristics of powder (solid) by a mercury-intrusion method, for the pore distribution and pore volume centered on mesopores and macropores. Japanese Industrial Standard (JIS) Z8830 is a measurement method for the BET specific surface area by a nitrogen gas adsorption method, for the surface size inside pores centered on micropores. Of course, if necessary, these methods may be combined to perform the measurement.

The specific surface area of the molybdenum disulfide fine particles of the present embodiment as measured by the BET method is preferably from 0.01 m²/g to 500 m²/g. The specific surface area is more preferably 1 m²/g or more, more preferably 10 m²/g or more, and still more preferably 20 m²/g or more. The specific surface area may be 500 m²/g or less, 200 m²/g or less, or 100 m²/g or less. The specific surface area is more preferably from 20 to 200 m²/g.

The average particle size of the molybdenum disulfide fine particles of the present embodiment is preferably from 10 nm to 100 µm. The average particle size of the molybdenum disulfide fine particles of the present embodiment can be measured by, for example, a known particle size distribution measurement method. The average particle size of the molybdenum disulfide fine particles of the present embodiment is more preferably 10 nm or more, more preferably 20 nm or more, and still more preferably 50 nm or more. The average particle size may be 100 µm or less, 10 µm or less, or 1 µm or less.

The molybdenum disulfide fine particles according to the present embodiment preferably have a 2H crystal structure. The "2H crystal structure" is a hexagonal crystal structure and is the most stable crystal structure of molybdenum disulfide. The inclusion of the 2H crystal structure provides an effect of improving stability of the structure.

In the method for producing molybdenum disulfide fine particles according to the present embodiment, molybdenum disulfide fine particles having a 2H crystal structure can be efficiently produced.

As a method for confirming the "2H crystal structure", a known X-ray diffraction (XRD) method can be used.

The molybdenum disulfide fine particles may have a 3R crystal structure. The "3R crystal structure" is a rhombohedral crystal of a three-layer unit cell. The inclusion of the 3R crystal structure provides an excellent catalytic effect.

In the method for producing molybdenum disulfide fine particles according to the present embodiment, molybdenum disulfide fine particles having a 3R crystal structure can be efficiently produced.

As a method for confirming the "3R crystal structure", a known X-ray diffraction (XRD) method can be used.

### [Raw material]

In the method for producing molybdenum disulfide fine particles of the present embodiment, molybdenum trioxide and sulfur are used as raw materials.

The molybdenum trioxide used in the method for producing molybdenum disulfide fine particles of the present embodiment may be used alone or in combination with other molybdenum oxides such as molybdenum dioxide. The sulfur may be used alone or in combination with a sulfur compound other than sulfur, such as hydrogen sulfide. Sulfur may be used in the reaction in the form of a solid, or in the form of a liquid or gas at a high temperature. Molybdenum trioxide may be used in the reaction in the form of a solid, or in the form of a liquid or gas at a high temperature.

The purity of each of these raw materials is preferably as high as possible, because molybdenum disulfide can be obtained quantitatively according to the stoichiometry by determining the appropriate number of moles used, and molybdenum disulfide of high purity can be obtained with a smaller content of by-products.

However, when molybdenum trioxide is used as a fusing agent to produce inorganic fillers such as alumina, spinel, and other metal composite oxides and particles of precious stones such as ruby, sapphire, and red spinel by a high-temperature flux method, a gas containing molybdenum trioxide as a main component evaporates from the reaction system in the course of the flux method. Thus, the vapor can be collected and reused in the production of the molybdenum disulfide fine particles of the present embodiment in the form of a gas or liquid or in the form of a solid by cooling, if necessary. According to such a method, the production of the above-described inorganic fillers and precious stones and the production of molybdenum disulfide useful as a catalyst, for example, can be carried out in parallel. As a result, equipment for collecting molybdenum trioxide, which is required in the former production alone, is also not required. The productivity of both can be remarkably enhanced while suppressing the environmental load, equipment cost and installation space, as compared with the case of producing the same separately and independently.

The molybdenum trioxide used in the production of the molybdenum disulfide fine particles of the present embodiment may have any properties, but when used as a solid raw material in the above reaction, the average particle size of the molybdenum trioxide is preferably 10 µm or less. In addition, the average primary particle size of 50 particles of molybdenum trioxide in the visual field of a two-dimensional image of a transmission electron microscopic (TEM) photograph is more preferably from 5 to 5000 nm, and still more preferably from 5 to 1000 nm. This is because, when the average primary particle size is from 5 to 5000 nm or from 5 to 1000 nm, not only a more efficient reaction can be carried out, but also the molybdenum disulfide of the present embodiment described above can be more easily obtained. The magnification of the TEM may be a magnification such that at least 50 particles of molybdenum trioxide are contained in one visual field in visual observation or an image photograph, but it is preferable to select an appropriate magnification from the range of from 1000 to 200000 times based on the range of length, width, and thickness on average, which will be described later. An SEM may be used instead of the TEM.

The BET specific surface area of the molybdenum trioxide is preferably 0.1 m²/g or more.

As the molybdenum trioxide having the above-described specific average primary particle size range, any known and commonly used commercially available product can be used. In addition, a powder of molybdenum trioxide having the above-described specific average primary particle size range can be easily obtained from molybdenum trioxide having a larger average primary particle size. For example, molybdenum trioxide, which has a larger average primary particle size and is a relatively inexpensive commercially available solid at room temperature, is heated and vaporized, and the resulting molybdenum trioxide gas is rapidly cooled, whereby a powder of molybdenum trioxide, which has the above-described specific average primary particle size range and is an excellent raw material for obtaining the molybdenum disulfide of the present embodiment, can be easily obtained.

The powder of molybdenum trioxide, a preferable raw material as described above, can be obtained by bringing the molybdenum trioxide gas in a molecular state into contact with a large amount of refrigerant, which is in a large excess compared to the amount of the molybdenum trioxide gas, to cool the molybdenum trioxide gas. This principle itself is well known and can be realized with a known and commonly used device. If the amount of molybdenum trioxide gas is extremely small, the molybdenum trioxide gas is diluted with the refrigerant by bringing the molybdenum trioxide gas into contact with a large excess of refrigerant compared to the amount of the molybdenum trioxide gas, and the molybdenum trioxide is cooled with a phase change from a gas to a solid in an extremely short time. The larger the amount of the refrigerant than the amount of the molybdenum trioxide in the form of gas, the closer the state approaches an infinite dilution condition, whereby rapid cooling becomes possible. Cooling can be performed by introducing a large amount of refrigerant into the system from the outside (outside the system) all at once, or intermittently or continuously by dividing a large amount of refrigerant or the like.

### [Electromagnetic Wave Irradiation (Heating)]

The frequency of the electromagnetic wave used in the method for producing molybdenum disulfide fine particles of the present embodiment is in the range of from 300 to 30000 MHz. The frequency of the electromagnetic wave is preferably in the range of from 900 to 3000 MHz.

The electromagnetic wave according to the present embodiment can be generated by using, for example, an electromagnetic wave generator used in a known electromagnetic wave heating device. The electromagnetic wave generator may include, for example, a mechanism for passing a purge gas or the like, a sensor for measuring the temperature in the furnace, and an exhaust pump for evacuating the inside of the furnace. Examples of a commercially available electromagnetic wave generator include MRK-3050 available from Kyoei Electric Kilns Co., Ltd., and a microwave heating device AMU-RUSH available from Motoyama Co., Ltd.

The method for producing molybdenum disulfide fine particles of the present embodiment may involve irradiating molybdenum trioxide with the electromagnetic wave using an electromagnetic wave heating device to heat the molybdenum trioxide and cause the heated molybdenum trioxide to react with sulfur.

The electromagnetic wave heating device may include an electromagnetic wave generator and a reaction unit. In the reaction unit, molybdenum trioxide and sulfur can be disposed as raw materials.

In the method for producing molybdenum disulfide fine particles of the present embodiment, the intensity of the electromagnetic wave to be irradiated can be appropriately selected according to the form, composition (blending ratio of molybdenum trioxide and sulfur), weight, arrangement, installation place, and the like of the raw materials to be irradiated. The intensity of the electromagnetic wave to be irradiated can be adjusted by, for example, the temperature of the raw materials to be irradiated.

In the case of adjusting the irradiation intensity of the electromagnetic wave to be irradiated depending on the temperature of the raw material to be irradiated, for example, the (surface or internal) temperature (sometimes referred to as electromagnetic wave heating temperature) of the raw material can be measured during irradiation with the electromagnetic wave.

The electromagnetic wave time is not particularly limited as long as the time for supplying the heating energy necessary for the reaction can be secured, and may be, for example, 10 minutes or more, from 10 minutes to 10 hours, from 20 minutes to 5 hours, or from 30 minutes to 3 hours.

The irradiation with the electromagnetic wave may be performed continuously for a constant time or by intermittently turning ON/OFF. The irradiation intensity of the electromagnetic wave at the time of the irradiation may be constant, or may be changed while the electromagnetic wave heating temperature is kept constant. The production method of the present embodiment is characterized in that the heating can be controlled by ON/OFF, as compared with a known heating method using an electric furnace or the like.

In the method for producing molybdenum disulfide fine particles of the present embodiment, the reaction of molybdenum trioxide and sulfur may be carried out by stoichiometrically determining the respective charged molar ratios according to the reaction formula shown in formula (1) above. Specifically, when molybdenum trioxide and sulfur serving as a sulfur source are used, the charged molar ratio is preferably in the range of, for example, sulfur/molybdenum trioxide (molar ratio) = 2.0 to 15.0. The charged molar ratio is more preferably in the range of sulfur/molybdenum trioxide (molar ratio) = 2.0 to 12. As the excess amount of sulfur increases, the amount of the sulfur charged can further suppress the presence of unreacted molybdenum trioxide.

From the viewpoint of energy saving, the charged molar ratio is still more preferably in the range of sulfur/molybdenum trioxide (molar ratio) = 3.0 to 10. In particular, since the production method of the present embodiment uses the electromagnetic wave heating, as demonstrated by comparison between Examples and Comparative Examples described later, the presence of unreacted molybdenum trioxide can be suppressed even with a smaller amount of sulfur blended than in the case of using known electric furnace heating.

The reaction between molybdenum trioxide and sulfur can be carried out, for example, by uniformly mixing both in advance to obtain a powder, and heating the powder by irradiation with electromagnetic waves at a temperature of from 200 to 1000°C in a heat-resistant container (sometimes referred to as "electromagnetic wave heating"). The electromagnetic wave irradiation (heating) time can be selected from, for example, a range of from 2 to 10 hours. Preferably, the reaction is carried out at a temperature of from 300 to 600°C for an electromagnetic wave irradiation (heating) time of from 2 to 7 hours.

The above-described electromagnetic wave irradiation (heating) can be performed according to any electromagnetic wave irradiation (heating) profile. Specifically, for example, the temperature may be raised from room temperature at a constant rate and maintained at a constant temperature within the above heating temperature range for a constant time, or the temperature may be raised or lowered stepwise within the above temperature range to vary the heating temperature and maintained at each temperature for a constant time. The heating is preferably performed for a time until the molybdenum disulfide produced does not increase and the produced amount no longer changes (becomes saturated).

The proportion of the molybdenum disulfide fine particles containing molybdenum disulfide produced based on the above-described reaction can be determined by quantifying molybdenum disulfide. Examples of a method for quantifying the molybdenum disulfide include a method of fixing conditions other than time in a predetermined heating profile, sampling the product at each heating time, and subjecting the thus-cooled product to quantification of molybdenum disulfide by high-frequency inductively coupled plasma (ICP) emission spectrometry. If the relationship between the time and molybdenum disulfide is grasped in this manner, the reaction end point can be determined only by the heating time when the production method of the present embodiment is industrially carried out.

If necessary, the reaction can be carried out with ventilation. Specifically, the reaction can also be carried out while passing an inert gas such as helium or argon, nitrogen, air, or the like into a heat-resistant container.

In the case of obtaining molybdenum disulfide from molybdenum trioxide and sulfur, the electromagnetic wave irradiation (heating) conditions may be within the above-described range. An appropriate selection of the electromagnetic wave irradiation (heating) rate, ON/OFF control, and the like can prevent a larger amount of unreacted molybdenum trioxide from remaining due to insufficient reaction with molybdenum trioxide. When the electromagnetic wave irradiation (heating) rate, the ON/OFF control, and the like are not appropriately selected, the temperature rising rate is slow, and sulfur is volatilized out of the system before the reaction. As a result, the reaction with molybdenum trioxide may become insufficient, leading to a larger amount of unreacted molybdenum trioxide remaining. In addition, placing a lid on the heat-resistant container in which this reaction is carried out so as not to be sealed can similarly suppress the volatilization of the sulfur out of the system, thereby preventing a larger amount of unreacted molybdenum trioxide from remaining. These may be used in combination.

As for a method for controlling the temperature rising rate, for example, the temperature of a mixture of molybdenum trioxide and sulfur to be heated is measured, and the ON/OFF of the electromagnetic wave irradiation or the irradiation intensity can be controlled so that the temperature rising rate becomes constant. Examples of a method for measuring the temperature of the mixture include a method of inserting a thermocouple into the mixture to measure the temperature and a method of measuring the temperature of the mixture by thermography. In addition, when the mixture is kept at a constant temperature after the temperature rise, the temperature of the mixture is measured by the method for measuring the temperature, and the ON/OFF of the electromagnetic wave irradiation or the irradiation intensity can be controlled so that the temperature is maintained.

### [Conversion Rate to MoS₂]

In the method for producing molybdenum disulfide fine particles of the present embodiment, as described above, the reaction is stoichiometrically carried out according to the reaction formula shown in formula (1) above. Accordingly, when the charged molar ratio of molybdenum trioxide and sulfur is in a range where the amount of sulfur is excessive, the presence of unreacted molybdenum trioxide can be suppressed. The evaluation can be confirmed by the conversion rate to MoS₂.

As used herein, the "conversion rate to MoS₂ (unit: %)" is the number of moles of molybdenum disulfide contained in the produced molybdenum disulfide fine particles with respect to 100 moles of the number of moles of molybdenum trioxide blended as a raw material. For example, when the amount of molybdenum disulfide produced using 100 moles of molybdenum trioxide is 80 moles, the conversion rate to MoS₂ is 80%.

In the method for producing molybdenum disulfide fine particles of the present embodiment, the conversion rate of MoS₂ of the produced molybdenum disulfide fine particles is related to the charged molar ratio of molybdenum trioxide and sulfur. When the charged molar ratio of molybdenum trioxide and sulfur is in a range where the amount of sulfur is excessive, the conversion rate to MoS₂ is high.

In addition, as demonstrated in Examples and Comparative Examples described below, the method for producing molybdenum disulfide fine particles of the present embodiment may involve directly heating only molybdenum trioxide using electromagnetic waves. Therefore, a higher conversion rate to MoS₂ can be obtained as compared with the known electric furnace heating method even when the charged molar ratios of molybdenum trioxide and sulfur are the same. In addition, since the conversion rate of MoS₂ is high, the excess amount of sulfur in the production method of the present embodiment may be lower than that in the known electric furnace heating method.

A method for evaluating the conversion rate to MoS₂ will be described in detail in Examples.

### EXAMPLES

Hereinafter, the present invention will be specifically described based on Examples, but the present invention is not limited to the following Examples.

### (Raw Materials and the Like)

Molybdenum trioxide: average particle size of 5 µm, available from Taiyo Koko Co., Ltd.

Sulfur (available from Kanto Chemical Co., Inc.)

### (Apparatus)

XRD measuring apparatus: Ultima IV available from Rigaku Corporation

### (Method for evaluating conversion rate to MoS₂)

The conversion rate R_{C} of the molybdenum disulfide particles to MoS₂ can be determined by a reference intensity ratio (RIR) method from profile data obtained by X-ray diffraction (XRD) measurement of the molybdenum disulfide particles. The conversion rate R_{C} to MoS₂ can be determined from the following equation (2). ${R}_{C} \left(%\right) = \left({I}_{A}/{K}_{A}\right) / \left(\left({I}_{A}/{K}_{A}\right)+Σ\left({I}_{B}/{K}_{B}\right)\right) \times 100$

In formula (2) above,
K_{A} is an RIR value of molybdenum disulfide (MoS₂),
I_{A} is an integrated intensity of a peak near 2θ = 14.4° ±0.5° assigned to a (002) plane or a (003) plane of molybdenum disulfide (MoS₂),
K_{B} is an RIR value of each molybdenum oxide (MoO₃ as a raw material, Mo₉O₂₅, Mo₄O₁₁, MoO₂, and the like as reaction intermediates),
I_{B} is an integrated intensity of the strongest peak of each molybdenum oxide (MoO₃ as a raw material, Mo₉O₂₅, Mo₄O₁₁, MoO₂, and the like as reaction intermediates).

Here, values described in the database of inorganic crystal structures (ICSD) (available from Japan Association for International Chemical Information) can be used as the RIR values, and integrated X-ray powder diffraction software (PDXL2, available from Rigaku Corporation) can be used for analysis.

### Synthesis Example 1

Molybdenum trioxide was produced using the same method as in Example 1 of Patent Document 4.

Transition aluminum oxide (activated alumina, available from Wako Pure Chemical Industries, Ltd., average particle size: 45 µm) in an amount of 1 kg was mixed with 1 kg of molybdenum trioxide (available from Taiyo Koko Co., Ltd.). Then, the resulting mixture was charged into a sagger and calcined at a temperature of 1100°C for 10 hours in the calcining furnace 2 of the production apparatus 1 shown in Fig. 1 of Patent Document 4. During calcining, outside air (blowing speed: 50 L/min, outside-air temperature: 25°C) was introduced from a side surface and a lower surface of the calcining furnace 2. Molybdenum trioxide was evaporated in the calcining furnace 2, then cooled in the vicinity of the collection device 4, and precipitated as particles. An RHK simulator (available from Noritake Co., Ltd.) was used as the calcining furnace 2, and a VF-5N dust collector (available from AMANO Corporation) was used as the collection device 4.

After calcining, 1.0 kg of aluminum oxide, a blue powder, and 0.85 kg of molybdenum trioxide powder collected by the collection device 4 were taken out from the sagger. The collected molybdenum trioxide powder had an average particle size of primary particles of 80 nm, and X-ray fluorescence (XRF) measurement confirmed that the purity of molybdenum trioxide was 99.7%. The specific surface area (SA) of the molybdenum trioxide powder measured by the BET method was 44.0 m²/g. The evaluation method of Synthesis Example 1 is the same as the method used in Example 1 of Patent Document 4.

### Example 1

Molybdenum trioxide (available from Taiyo Koko Co., Ltd., 5 µm) was mixed in an amount of 1.00 g with 1.57 g of sulfur (available from Kanto Chemical Co., Inc) using a stirring rod. Then, the mixed raw material was charged into an alumina crucible. Thereafter, the crucible was placed in a stainless steel chamber equipped with an electromagnetic wave irradiation port, a gas introduction port, and a gas exhaust port. Next, nitrogen gas was supplied to the chamber at a rate of 0.5 L per minute using a nitrogen gas cylinder to completely replace the inside of the chamber with nitrogen gas. Then, under a nitrogen gas flow of 0.5 L per minute, the mixed raw material in the crucible was irradiated with electromagnetic waves having a frequency of 2450 MHz at an intensity of 100 W from the electromagnetic wave irradiation port at the upper part of the chamber, and heated until the temperature of the mixed raw material reached 450°C. The temperature of the mixed raw material was observed in a noncontact manner from an electromagnetic field irradiation port using a radiation thermometer. After the temperature of the mixed raw material reached 450°C, the irradiation intensity of the electromagnetic wave was adjusted to maintain the temperature at 450°C. The electromagnetic wave irradiation was stopped one hour after the temperature reached 450°C. After the internal temperature of the crucible had decreased to 50°C or less, the supply of nitrogen was stopped, and the powder was collected from the crucible.

A characteristic peak attributable to MoS₂ was observed in the XRD measurement, confirming the formation of MoS₂ fine particles. The conversion rate of MoS₂ was confirmed to be 60% or more.

### Example 2

Molybdenum sulfide fine particles were synthesized in the same manner as in Example 1 except that the molybdenum trioxide obtained in Synthesis Example 1 was used.

A characteristic peak attributable to MoS₂ was observed in the XRD measurement, confirming the formation of MoS₂ fine particles. The conversion rate of MoS₂ was confirmed to be 80% or more.

### Comparative Example 1

With reference to Comparative Example 2 of Patent Document 4, molybdenum sulfide fine particles were produced by electric-type heating. The conversion rate to MoS₂ was low due to electric-type heating and was confirmed to be 53%. It was confirmed that the energy consumption was higher than that of heating by electromagnetic wave irradiation in the production of 1 kg of molybdenum sulfide fine particles.

### (Discussion)

Examples 1 and 2 achieved higher conversion rates to MoS₂ than Comparative Example 1. Since electromagnetic wave heating was used in Examples 1 and 2, molybdenum trioxide absorbed electromagnetic waves (microwaves) well, resulting in a rapid increase in temperature. On the other hand, sulfur has a poor electromagnetic wave absorbability, and therefore sulfur itself is not easily heated even by electromagnetic wave irradiation. Therefore, vaporization of sulfur is suppressed. When molybdenum trioxide was mixed with sulfur and irradiated with electromagnetic waves, molybdenum trioxide was preferentially heated, and the reaction activity thereof was enhanced. A part of the molybdenum trioxide heated to a high temperature and thereby exhibited increased reaction activity reacted with the surrounding sulfur and immediately converted into molybdenum disulfide. Heating by electromagnetic wave irradiation activated the reaction of molybdenum trioxide while suppressing vaporization and removal of sulfur, thereby enabling efficient production of molybdenum disulfide fine particles.

In Example 2, the use of the fine particles of molybdenum trioxide obtained in Synthesis Example 1 further enhanced the reaction efficiency with sulfur as compared with Example 1. As a result Example 2 achieved a higher conversion rate to MoS₂ than Example 1.

### REFERENCE SIGNS LIST

1 Chamber
2 Container
6 Air inlet
8 Exhaust port
10 Production apparatus (apparatus for producing molybdenum disulfide fine particles)

## Claims

1. A method for producing molybdenum disulfide fine particles, the method comprising:
irradiating molybdenum trioxide with an electromagnetic wave in the presence of sulfur to heat the molybdenum trioxide and cause the heated molybdenum trioxide to react with the sulfur,
wherein a frequency of the electromagnetic wave is in a range of from 300 to 30000 MHz.

2. The method for producing molybdenum disulfide fine particles according to claim 1, wherein the frequency of the electromagnetic wave is in a range of from 900 to 2450 MHz.

3. The method for producing molybdenum disulfide fine particles according to claim 1 or 2, wherein an average particle size of the molybdenum disulfide fine particles is from 10 nm to 10 µm.

4. The method for producing molybdenum disulfide fine particles according to claim 1 or 2, wherein a BET specific surface area of the molybdenum disulfide fine particles is from 0.01 m²/g to 500 m²/g.

5. The method for producing molybdenum disulfide fine particles according to claim 1 or 2, wherein the molybdenum disulfide fine particles have a 2H crystal structure.

6. The method for producing molybdenum disulfide fine particles according to claim 1 or 2, wherein the molybdenum disulfide fine particles have a 3R crystal structure.

7. The method for producing molybdenum disulfide fine particles according to claim 1 or 2, wherein an average particle size of the molybdenum trioxide is 10 µm or less.

8. The method for producing molybdenum disulfide fine particles according to claim 1 or 2, wherein a BET specific surface area of the molybdenum trioxide is 0.1 m²/g or more.
